# EUROPÄISCHE PATENTSCHRIFT

(11) **EP 0 531 793 B1**
(45) Veröffentlichungstag und Bekanntmachung des Hinweises auf die Patenterteilung: **15.11.1995**
(21) Anmeldenummer: 92114454.9
(22) Anmeldetag: 25.08.1992
(51) Int. Cl.: B60S 1/08

(54) **Elektrischer Scheibenwischerantrieb**
Electric windscreen wiper drive
Entraînement électrique d'essuie glace

(30) Priorität: 11.09.1991 DE 4130065
(43) Veröffentlichungstag der Anmeldung: 17.03.1993
(73) Patentinhaber: Licentia Patent-Verwaltungs-GmbH, 60596 Frankfurt (DE)
(72) Erfinder: Altmann, Manfred, W-2900 Oldenburg (DE); Huebner, Peter, W-2902 Rastede (DE); Orthmann, Reinhard, Dr., W-6500 Mainz (DE); Schöner, Hans-Peter, Dr., W-6104 Seeheim-Jugenheim (DE)
(74) Vertreter: Vogl, Leo, Dipl.-Ing.

(56) Entgegenhaltungen:
- EP-A- 0 184 312
- DE-A- 4 131 948
- US-A- 4 866 357
- US-A- 4 980 599
- PATENT ABSTRACTS OF JAPAN vol. 14, no. 410 (M-1020)5. September 1990 & JP-A-02 198 440 (HONDA ELECTRON CO.) 18. Juni 1990
- PATENT ABSTRACTS OF JAPAN vol. 13, no. 281 (M-842)(3629) 27. Juni 1989 & JP-A-01 074 148 (ICHIKOH) 20. März 1989

## Beschreibung

Die Erfindung, betrifft einen elektrischen Scheibenwischerantrieb, insbesondere für Kraftfahrzeuge der im Oberbegriff des Patentanspruchs 1 angegebenen Art.

Die bisher bekannten Scheibenwischerantriebe weisen Elektromotore, Untersetzungsgetriebe und gesonderte Parkstellungsvorrichtungen auf. Das Getriebe ist notwendig, um die Drehzahlen der elektromagnetischen Motoren auf die notwendige Wischdrehzahl von 20 bis 40 pro Minute zu reduzieren. Ein Nachteil dieses festen Getriebes bestellt darin, daß der Bereich und der Ort, in dem der Scheibenwischer arbeitet, festgelegt ist. Dieses Getriebe bestimmt auch die relative Wischergeschwindigkeit in Abhängigkeit von der Lage des Wischers. Zudem erzeugt das Getriebe unangenehme und störende Geräusche und benötigt viel Platz. Das Getriebegehäuse des Scheibenwischermotors muß daher sehr groß sein.

Ein weiterer Nachteil der bekannten Scheibenwischerantriebe mit Getrieben besteht darin, daß die Wischgeschwindigkeit gegenüber den Fahrzeug- und Umweltbedingungen nicht freizügig eingestellt werden kann. Hierdurch lassen sich keine optimaler Wischqualitäten bei unterschiedlichen Witterungsbedingungen erzielen. Auch wird die Lebensdauer der Wischerblätter durch das feste Getriebe sehr beeinträchtigt.

Durch den Stand der Technik gemäß - Patent Abstracts of Japan, vol. 14, no. 410 (M-1020) 05.09.90 & JP-A-02 158 440 - ist ein elektrischer Scheibenwischerantrieb, insbesondere für Kraftfahrzeuge bekannt, wobei als Antriebselement für den Scheibenwischerarm ein selbsthemmender Ultraschallmotor vorgesehen ist.

Weiterhin offenbart die US-PS 4,866,357 einen Scheibenwischerantrieb mit einer aufwendigen Steuerschaltung zur Veränderung des Wischbereichs des Wischerblattes.

Der Erfindung liegt die Aufgabe zugrunde, einen elektrischen Scheibenwischerantrieb zu schaffen, der geräuscharm arbeitet, eine flache Bauweise ermöglicht und bei dem die Wischqualität und die Lebensdauer der Wischerblätter erhöht werden. Diese Aufgabe wird durch die im Patentanspruch 1 gekennzeichnete Erfindung gelöst.

Der Scheibenwischerantrieb ermöglicht mit einfachsten Mitteln eine frei steuerbare Lage des Scheibenwischers, wodurch eine Scheibenwischerendlage außerhalb des normalen Wischfeldes angefahren oder um den Wischbereich je nach den Erfordernissen in seiner Lage oder Größe variiert werden kann. Im Winterbetrieb kann man den Wischer nur in dem Bereich wischen lassen, in dem auch eine Scheibenheizung wirksam ist. Bei starken Regenfällen ist es möglich, bei gleicher oder nur wenig erhöhter Wischgeschwindigkeit den Wischbereich zu verkleinern, um häufiger diesen Bereich von Wasser zu befreien. Bei starken Regenfällen kann der Antrieb des Wischers auf der Seite des Beifahrers unterbrochen werden.

Durch Wegfall des Getriebes und durch die freizügige Einstellung der Wischgeschwindigkeit werden die Wischqualität und die Lebensdauer der Wischerblätter erhöht. Durch eine einfache Ansteuerung des Ultraschallmotors ist es möglich, eine konstante Geschwindigkeit des Wischerblattes im gesamten Wischbereich zu erzielen, was für eine gute Wischqualität unabdingbar ist. Andererseits ist es möglich, die Wischlippe des Wischerblattes am Umsteuerpunkt langsam umzulegen, wodurch gegenüber den bekannten Wischerantrieben die Lebensdauer des Wischerblattes erhöht wird. Weiterhin zeichnet sich der Scheibenwischerantrieb durch eine geringe Bautiefe und durch geringe Kosten aus. Da der neue getriebelose Antrieb mit Speicherfrequenzen im Ultraschallbereich arbeitet, werden auch keine hörbaren Geräusche erzeugt.

Weitere vorteilhafte Ausgestaltungen des Erfindungsgegenstandes sind den weiteren Unteransprüchen und der Beschreibung zu entnehmen.

Die Erfindung wird anhand von Ausführungsbeispielen im folgenden näher beschrieben. Es zeigt:
- Figur 1: Einzelteile des Scheibenwischerantriebes in schaubildlicher Darstellung,
- Figur 2: einen Schnitt durch das Gehäuse mit dem Stator und dem Rotor,
- Figur 3: den Scheibenwischer im eingebauten Zustand,
- Figur 4: schematische Darstellung einer Ansteuerungsmöglichkeit des Wischerantriebes,
- Figur 5: Kennlinie der Wischgeschwindigkeiten,
- Figur 6: Kennlinien für optimale Wischgeschwindigkeiten in Abhängigkeit vom Regenanfall,
- Figur 7: schematische Darstellung unterschiedlicher Wischerfeldbereiche,
- Figur 8: Anordnungen von Sensoren zur Abtastung des Rotors,
- Figur 9: Rotorabtastung mit Markierungen auf dem äußeren Umfang des Rotors und
- Figur 10: Rotorabtastungen mit Markierungen auf der Stirnfläche des Rotors.

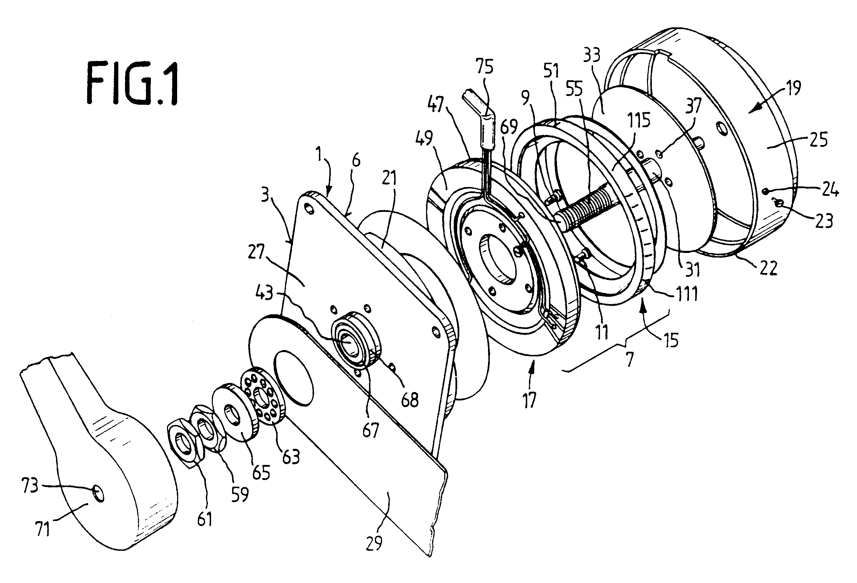

Die Figuren 1 bis 3 zeigen einen elektrischen Scheibenwischerantrieb, insbesondere für Kraftfahrzeuge gemäß einer bevorzugten Ausführungsform nach der Erfindung.

Der Scheibenwischerantrieb umfaßt eine Grundplatte 1, die gemäß Figur 1 über ein Flanschteil 3 mittels Schraubenverbindungen mit der Karosserie eines Kraftfahrzeuges im Bereich der Frontscheibe oder Heckscheibe befestigt werden kann. Mit der Rückseite 5 dieser Grundplatte 1 ist als elektromotorisches Antriebselement ein selbsthemmender Ultraschallmotor 7 mit Hilfe mehrerer Schrauben 9, 11 oder sonstiger Befestigungsmittel fest verbunden. Dieser Ultraschallmotor 7 hat in bekannter Weise einen Rotor 15 und einen Stator 17, die von einem zylindrischen Gehäuseteil 19 umgeben sind. Dieses Gehäuseteil 19 lagert auf einem zylindrischen Ansatz 21 und liegt mit der Stirnfläche 22 an der Rückseite 5 der Grundplatte 1 an, wobei die Arretierung des Gehäuseteiles 19 über Schrauben 23 erfolgt. Diese Schrauben 23 sind Gewindelöcher 24 in der Umfangsfläche 25 des Gehäuseteiles 19 durchschraubbar. Dieses Gehäuseteil 19 schützt als Abdeckteil den Rotor 15 und den Stator 17 gegen Wasser, Öl und Staub. Hierdurch wird außerdem ein Pfeifen des Ultraschallmotors 7 vermieden. Die Stirnfläche 27 der Grundplatte 1 dient als eine Kühleinrichtung, welche die von dem Ultraschallmotor 7 erzeugte Wärme direkt an die Karosserie des Kraftfahrzeuges oder über ein Wärmeableitblech 29 an die Karosserie abgibt. Hierdurch wird die Lebensdauer des Ultraschallmotors 7 erhöht. Das Wärmeleitblech 29 besteht aus einem Metall mit guter Wärmeleitfähigkeit.

Der Ultraschallmotor 7 ist koaxial um eine Antriebswelle 31 angeordnet. Am oberen Ende dieser Antriebswelle 31 ist eine Tellerfeder 33 mittels eines Klemmringes 35 fest angeordnet. Dieser Klemmring 35 ist über Nietverbindungen 37, 39 mit der Tellerfeder 33 fest verbunden und lagert mittels eines Preßsitzes auf einem Ansatz 41 der Antriebswelle 31. Am unteren Ende ist die Antriebswelle 31 in einem Rollenlager 43 drehbar gelagert, welches in einer Lagerausnehmung 45 in der Grundplatte 1 angeordnet ist. Die Tellerfeder 33 dient als Vorbelastungseinrichtung, welche den Rotor 15 gegen den Stator 17 drückt. Dieser Stator 17 umfaßt ein elastisches Teil 47 und ein piezoelektrisches Teil 49. Die Stirnfläche 51 des Rotors ist mit einer Haftschicht versehen, welche gegen den elastischen Teil 47 des Stators 17 gedrückt wird.

Ein auf der Antriebswelle 31 angeordnetes Gewinde 55 ragt aus dem Rollenlager 43 heraus, welches von einem zylindrischen Ansatz 68 umgeben ist. Auf dieses Gewinde 55 sind eine Schraube 59 und eine Konterschraube 61 aufschraubbar, wodurch die Anpreßkraft des Rotors 15 gegen den Stator 17 mittels der federnden Tellerfeder 33 genau einstellbar ist. Um die Drehbewegung der Antriebswelle 31 nach der Arretierung der Schraube 59 über die Konterschraube 61 zu ermöglichen, ist ein Axiallager 63 und eine Andruckscheibe 65 zwischen der Stirnfläche 67 des zylindrischen Ansatzes 68 und der Schraube 59 angeordnet. Auf dem freien Ende 69 der Antriebswelle 31 ist schließlich der Scheibenwischer 71 mit einer Lagerbohrung 73 fest angeordnet.

Außerdem ist der Ultraschallmotor 7 über eine Kabelleitung 75 mit einer Ansteuerschaltung 77 verbunden.

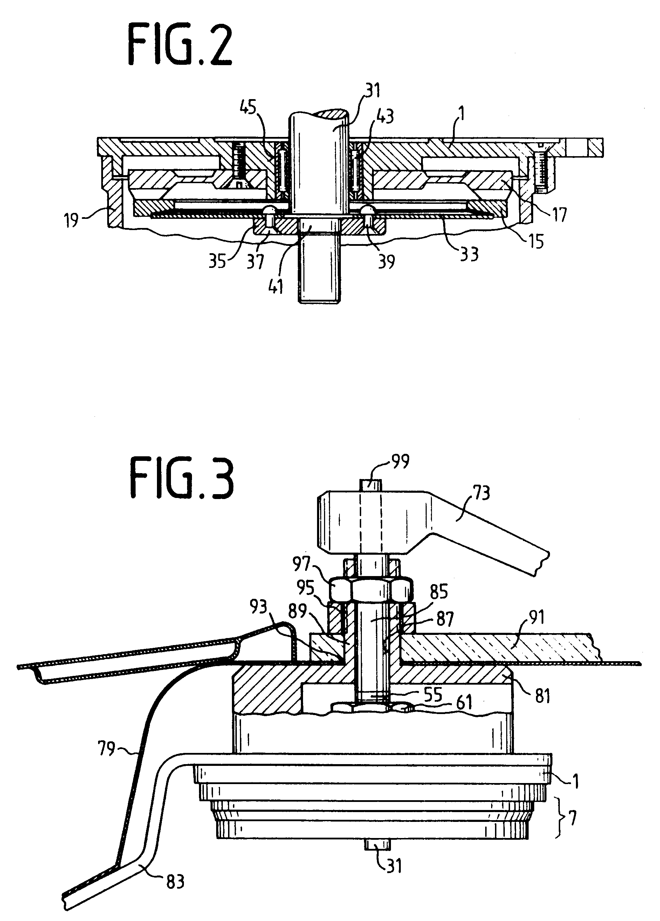

Gemäß Figur 3 ist die Grundplatte 1 nicht direkt mit der Karosserie 79 des Fahrzeuges verbunden, sondern es ist noch ein Zwischenlagerstück 81 vorgesehen. Die Wärmeableitung erfolgt ein Wärmeableitblech 83, welches mit der Karosserie 79 in Kontaktberührung steht. Hierbei ist die Antriebswelle 31 noch mit einer Verlängerungswelle 85 fest verbunden, welche in einem Lager 87 des Zwischenstückes 81 drehbar lagert. Das Zwischenstück 81 ragt mit einem zylindrischen Ansatz 89 durch Bohrungen 93 in der Karosserie 79 und der Glasscheibe 91. Die Befestigung des Zwischenstückes 81 erfolgt über eine auf ein Gewinde 95 aufschraubbare Schraube 97. Der Scheibenwischer 73 für die Glasscheibe 91 lagert auf dem freien Ende 99 der Verlängerungswelle 85. Der Aufbau des Ultraschallmotors 7 ist demgemäß Figur 1 identisch.

Wenn elektrische Treibersignale an das piezoelektrische Teil 49 des Stators 17 über die Kabelleitung 75 angelegt werden, setzt das piezoelektrische Teil 49 das elastische Teil 47 in bekannter Weise in Schwingungen, und es wird eine elastische Welle erzeugt, die sich auf der Oberfläche des elastischen Teiles 47 ausbreitet.

Als Folge hiervon dreht sich der Rotor 15, der mit der Haftschicht 53 auf das elastische Teil 47 gedrückt wird, zusammen mit der Antriebswelle 31 durch die Reibungskraft infolge der elastischen Welle. Der Ultraschallmotor 7 hat einen einfachen Aufbau, ist kompakt ausgebildet und gestattet ein leises Arbeiten. Da der Ultraschallmotor 7 außerdem noch einfach zu steuern ist, ist ein einfacher Antrieb des Scheibenwischers 73 möglich.

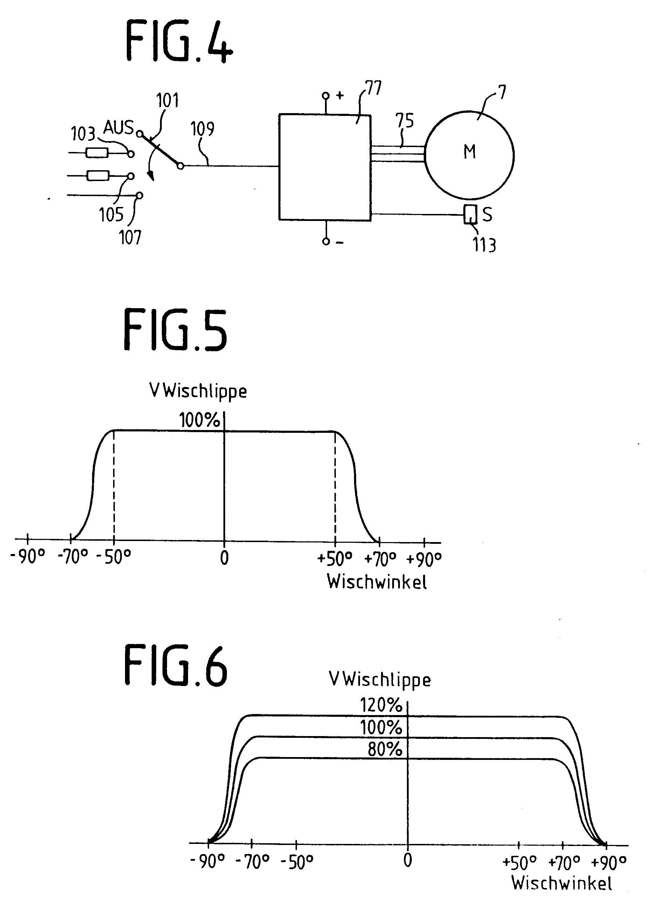

In der Figur 4 ist schematisch die Steuerung des Motors 7 und damit des mit diesem direkt verbundenen Scheibenwischers 71 dargestellt. Durch Verschwenken eines Lenkstockschalters 101 aus der Stellung "AUS" in die Stellung 103, 105 oder 107 sind unterschiedliche Spannungssignale über nur eine Busleitung 109 an die Ansteuerungsschaltung 77, in dem ein Mikroprozessor angeordnet sein kann, gegeben. Danach werden entsprechende Steuersignale über die Kabelleitung 75 an den Ultraschallmotor 7 gegeben. Durch diese Spannungscodierung als vereinfachte Bussteuerung gemäß Figur 4 ist der Wischerantrieb vielseitig in bezug auf Wischgeschwindigkeit optimal einsetzbar.

Die Drehzahl des Schwingungsantriebes kann stellungsabhängig variiert werden, so daß optimale Wischgeschwindigkeiten über den gesamten Wischbereich erzielt werden. Die Figur 5 zeigt einen Geschwindigkeitsverlauf des Scheibenwischers 71 und damit der auf diesem angeordneten Wischlippe, wobei zu erkennen ist, daß das Umlegen der Wischlippe des Wischerblattes am Umsteuerpunkt langsam erfolgt und die Wischgeschwindigkeit im mittleren Wischbereich konstant ist. Hierdurch wird eine lange Lebensdauer der Wischlippe und damit des Wischerblattes erzielt.

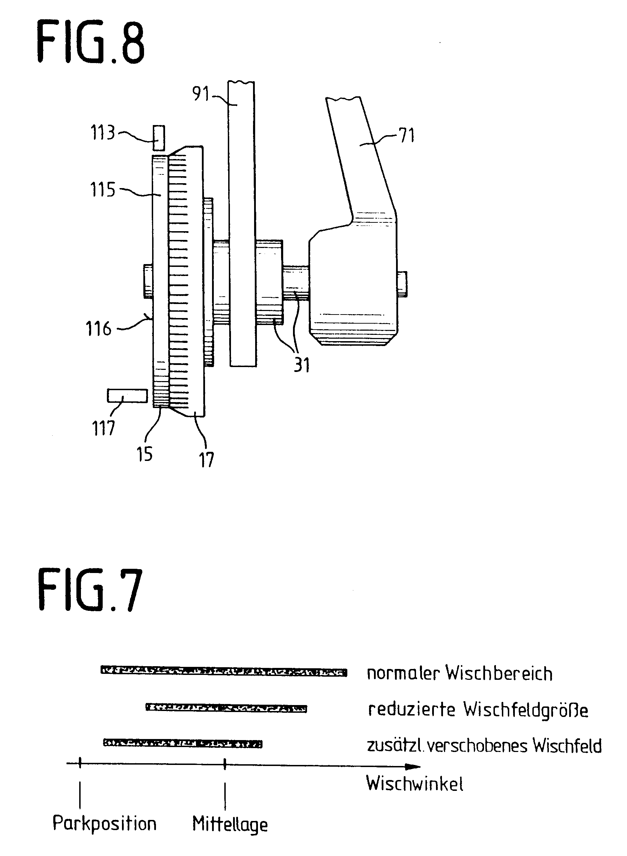

Neben der Erhöhung der Lebensdauer des Wischerblattes wird durch den neuen Antrieb ohne Getriebe auch eine optimale Wischqualität erzielt. So ist die Wischgeschwindigkeit in Abhängigkeit von den Regenfällen und damit von der Befeuchtung der Scheibe 91 veränderbar, was der Figur 6 zu entnehmen ist. Beim normalen Regen wird eine mittlere Wischgeschwindigkeit von 100 Prozent gewählt, während bei starkem Regen die Geschwindigkeit auf 120 Prozent zu der mittleren Geschwindigkeit und bei Nieselregen auf 80 Prozent zu der mittleren Geschwindigkeit einstellbar sind. Die Wischqualität kann außerdem gemäß Figur 7 noch dadurch erhöht werden, daß bei starken Regenfällen die Wischfeldgröße reduziert oder auch noch verschoben wird. Bei starken Regenfällen ist es außerdem nicht notwendig, das Gesichtsfeld des Beifahrers vollständig vom Regen zu befreien.

Die Wischfeldgröße, der Wischfeldbereich und die Wischgeschindigkeit sind über an dem Rotor 15 angeordnete Markierungspunkte 111 steuerbar, welche durch einen Positionssensor 113 gemäß Figur 4 abtastbar sind. Hierdurch wird die Lage des Rotors 15 und damit des Scheibenwischers 71 ermittelt. Dieser Positionssensor dient zur Erkennung der Parkposition des Scheibenwischers 71 bzw. der Wischernullage zur Positionsnumierung und zur Erkennung der Markierungspunkte auf dem Rotor 15, an denen die Geschwindigkeit variiert und der Wischer 71 gestoppt werden soll. Der Positionssensor 113 gemäß Figur 4 tastet auf dem äußeren Umfang 115 des Rotors 15 angeordnete Markierungspunkte 111 ab. Im Rahmen der Erfindung kann selbstverständlich auch die Stirnfläche 116 des Rotors 15 über einen Positionssensor 117 abgetastet werden, wobei die Stirnfläche 116 dann mit entsprechenden Markierungen zu versehen ist.

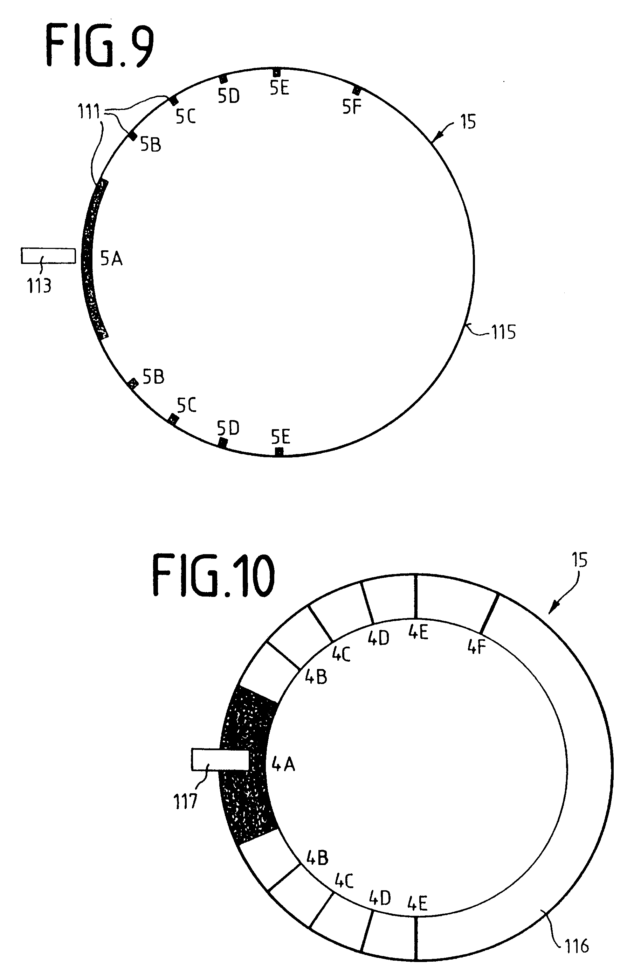

Die Figur 9 zeigt eine Ausführungsform zur Ermittlung der Lage des Rotors 15 und damit des direkt mit diesem verbundenen Scheibenwischers 71, wobei die Markierungspunkte 111 auf dem äußeren Umfang 115 des Rotors 15 angeordnet sind. Diese Markierungspunkte werden über den als optischen Sensor ausgebildeten Positionssensor 113 abgetastet, welcher hell und dunkel unterscheiden kann. Der breite dunkle Bereich 5A hat die Funktion einer Positionsnumierung, während die anderen Markierungspunkte 5B, 5C, 5D und 5E die Funktionen zum Verändern der Wischgeschwindigkeit und des Wischerstopps haben. Der Wischerstopp erfolgt über die Markierungspunkte 5E, während der Scheibenwischer 71 beim Abschalten in die Endlage bzw. in die Parkposition über den Markierungspunkt 5F gesteuert wird. Die Interpretation der einzelnen Markierungspunkte ist abhängig von einem Steuerprogramm in der Ansteuerschaltung 77, so daß bei normalem Wischbetrieb mit vollem Wischfeld bei Erreichen der Markierungen 5D die Wischgeschwindigkeit langsam auf eine Minimalgeschwindigkeit herabgefahren wird. Bei einem verkleinerten Wischfeldbereich beginnt die Geschwindigkeitsreduzierung bereits bei den Markierungspunkten 5C, während die Drehrichtungsumkehr hierbei bei den Markierungspunkten 5D erfolgt. Bei einem verlagerten Wischfeld sind die entsprechenden Markierungspunkte 5B und 5C in einer Richtung und 5D und 5E die entsprechenden Markierungspunkt in der anderen Richtung. Die Parkposition wird immer durch den Markierungspunkt 5F bestimmt.

Im Rahmen der Erfindung können die Markierungspunkte 111 als Hell-Dunkel-Punkte oder auch als Vertiefungen ausgebildet sein, wobei in letzterem Fall dann der Positionssensor 113 ein Abstandssensor sein muß. Auch können die Markierungspunkte 111 aus sonstigen Codierelementen bestehen, welche dann durch einen entsprechend ausgebildeten Abtastsensor abgetastet werden müssen.

In der Figur 10 sind die Markierungspunkte auf der Stirnfläche 116 angeordnet, welche durch den Positionssensor 117 abgetastet werden. Auch hierbei sind die Hell-Dunkel-Markierungen mit 4A bis 4F bezeichnet, deren Funktionen den Markierungen 5A bis 5F gemäß der Figur 9 entsprechen.

Der elektrische Scheibenwischerantrieb, insbesondere für Kraftfahrzeuge zeichnet sich durch den Direktantrieb über den Ultraschallmotor 7 durch eine relativ geringe Anzahl von erforderlichen Einzelteilen auf, so daß der Antrieb sich auf kostengünstige Weise herstellen läßt. Der Ultraschallmotor, der bei der Erfindung eingesetzt wird, arbeitet geräuscharm und hat ein verbessertes Ansprechverhalten, eine verbesserte Steuerbarkeit und einen verbesserten Wirkungsgrad. Außerdem wird durch die vorhandene Kühleinrichtung des Ultraschallmotors 7, die Standzeit dieses Motors beträchtlich verbessert. Auch arbeitet der getriebelose Ultraschallmotor mit Speisefrequenzen im Ultraschallbereich, wodurch keine hörbaren Geräusche erzeugt werden. Weiterhin ist dieser Ultraschallmotor sehr schnell umsteuerbar, so daß eine Drehrichtungsumkehr zur Erzeugung der hin- und hergehenden Wischbewegung nutzbar ist. Auch können die Wischfeldgröße, die Wischfeldlage und die Wischgeschwindigkeiten durch freie Wahl der Umsteuerpunkte je nach den gewünschten Anforderungen variiert werden. Die Drehzahl des Ultraschallmotors bzw. des Schwingungsantriebes kann stellungsabhängig variiert werden, wodurch eine gleichmäßige Wischbewegung im mittleren Wischbereich zur Erzielung guter Wischqualität bei gleichzeitiger feinfühliger Umsteuerung im Umkehrbereich zur Erzielung großer Wischblattlebensdauer möglich ist.

## Patentansprüche

1. Elektrischer Scheibenwischerantrieb, insbesondere für Kraftfahrzeuge, wobei als elektromotorisches Antriebselement ein selbsthemmender Ultraschallmotor (7) vorgesehen ist, über dessen Antriebswelle (31) der Scheibenwischerarm (71) antreibbar ist, **dadurch gekennzeichnet,** daß der Rotor (15) des Ultraschallmotors (7) auf seiner Antriebswelle (31) den Scheibenwischerarm (71) trägt und der Stator (17), der ein elastisches Teil (47) und einen aus einem elektromechanischen Energiewandler bestehenden Vibrator zur Erzeugung einer kreisförmig sich bewegenden Welle aufweist, mit der Fahrzeugkarosserie (79) in wärmeleitender fester Verbindung steht.

2. Scheibenwischerantrieb nach Anspruch 1, **dadurch gekennzeichnet,** daß, der Ultraschallmotor (7) mittels Schraubenverbindungen an einer Grundplatte (1) befestigbar ist, deren Flanschteil (3) mit der aus Blech bestehenden Karosserie (79) eines Kraftfahrzeuges in wärmeableitender Verbindung steht.

3. Scheibenwischerantrieb nach Anspruch 2, **dadurch gekennzeichnet,** daß zwischen dein Flanschteil (3) und der Karosserie (79) ein Wärmeableitblech (29) angeordnet ist, welches aus einem Metall mit guter Wärmeleitfähigkeit besteht, und daß die Grundplatte (1) aus Metall hergestellt ist.

4. Scheibenwischerantrieb nach einem der vorhergehenden Ansprüche, **dadurch gekennzeichnet,** daß der Ultraschallmotor (7) von einem Gehäuseteil (19) umgeben ist, welcher mit der Grundplatte (1) fest verbunden ist.

5. Scheibenwischerantrieb nach einem der vorhergehenden Ansprüche, **dadurch gekennzeichnet,** daß am oberen Ende der Antriebswelle (31) eine Tellerfeder (33) fest angeordnet ist, welche als Vorbelastungseinrichtung dient und den Rotor (15) gegen den Stator (17) drückt.

6. Scheibenwischerantrieb nach Anspruch 5, **dadurch gekennzeichnet,** daß an dem unteren Ende der Antriebswelle (31) ein Gewinde (55) angeordnet ist, welches aus einem Rollenlager (43) in der Grundplatte (1) herausragt und auf das eine Schraube (59) zur Einstellung der Anpreßkraft des Rotors (15) gegen den Stator (17) aufschraubbar ist.

7. Scheibenwischerantrieb nach Anspruch 6, **dadurch gekennzeichnet,** daß die Schraube (59) durch eine auf das Gewinde (55) aufschraubbare Kontermutter (61) arretierbar ist.

8. Scheibenwischerantrieb nach Anspruch 6 oder 7, **dadurch gekennzeichnet,** daß ein Axiallager (63) mit einer Andruckscheibe (65) zwischen der Schraube (59) und der Stirnfläche (67) eines zylindrischen Ansatzes (68) an der Grundplatte (1) angeordnet ist.

9. Scheibenwischetantrieb nach einem der vorhergehenden Ansprüche, **dadurch gekennzeichnet,** daß der Ultraschallmotor (7) über eine Kabelleitung (75) von einer Ansteuerschaltung (77) ansteuerbar ist, welcher Rotorstellungssignale von einem Positionssensor (113, 117) und spannungscodierte Signale über eine Busleitung (109) mittels eines Lenkstockschalters (101) zugeleitet werden und daß der Positionssensor (113, 117) ein optischer Sensor ist, welcher auf dem Rotor (15) angeordnete Markierungspunkte (111) abtastet.

10. Scheibenwischerantrieb nach Anspruch 9, **dadurch gekennzeichnet,** daß die Markierungspunkte (111) auf der Umfangsfläche (115) des Rotors (15) angeordnet sind.

11. Scheibenwischerantrieb nach einem der vorhergehenden Ansprüche, **dadurch gekennzeichnet,** daß der Rotor (15) durch den Positionssensor (113, 115) erkennbare Markierungspunkte (4a, 4b, 4c, 4d, 4e, 4f und 5a, 5b, 5c, 5d, 5e, 5f) zur Erkennung der Parkposition, einer Wischer-Null-Lage zur Positionsnumerierung und der Punkte, an denen die Geschwindigkeit variiert und der Wischer (71) gestoppt werden soll.

12. Scheibenwischerantrieb nach einem der vorhergehenden Ansprüche, **dadurch gekennzeichnet,** daß der Ansteuerschaltung (77) Signale von einem Steuerglied zugeleitet werden, durch die der normale Wischbereich des Scheibenwischers (71) auf eine Kleinere Wischfeldgröße reduzierbar ist.

13. Scheibenwischerantrieb nach Anspruch 12, **dadurch gekennzeichnet,** daß der Steuerschaltung (77) für den Ultraschallmotor (7) Signale von einem Steuerglied zugeleitet werden, durch die die verkleinerte Wischfeldgröße verschiebbar ist.

14. Scheibenwischerantrieb nach einem der vorhergehenden Ansprüche, **dadurch gekennzeichnet,** daß die Wischergeschwindigkeit des Scheibenwischers (71) durch die Ansteuerschaltung (77) je nach Regenstärke veränderbar ist.

15. Scheibenwischerantrieb nach einem der vorhergehenden Ansprüche, **dadurch gekennzeichnet,** daß die Wischgeschwindigkeit des Scheibenwischers in den Umkehrpunkten (4f, 5f) des Wischerblattes langsam auf Null reduzierbar ist.

## Claims

1. Electric screen washer drive, especially for motor vehicles, wherein a self-locking, ultrasound motor (7) is provided as an electric motorised drive element, by way of the drive shaft (31) of which motor the screen wiper arm (71) is drivable, characterised thereby that the rotor (15) of the ultrasound motor (7) carries the screen wiper arm (71) on its drive shaft (31) and the stator (17), which comprises a resilient part (47) and a vibrator, which consists of an electromechanical energy converter, for generation of a circularly moving wave, stands in thermally conductive fixed connection with the vehicle bodywork (79).

2. Screen washer drive according to claim 1, characterised thereby that the ultrasound motor (7) is fastenable by means of screw connections to a base plate (1), the flange part (3) of which stands in thermally conductive connection with the bodywork (79), consisting of sheet metal, of a motor vehicle.

3. Screen washer drive according to claim 2, characterised thereby that a heat dissipation plate (29), which consists of a metal with good thermal conductivity, is arranged between the flange part (3) and the bodywork (79) and that the base plate (1) is made of metal.

4. Screen washer drive according to one of the preceding claims, characterised thereby that the ultrasound motor (7) is enclosed by a housing part (17), which is fixedly connected with the base plate (1).

5. Screen washer drive according to one of the preceding claims, characterised thereby that a plate spring (33), which serves as a biassing device and presses the rotor (15) against the stator (17), is fixedly arranged at the upper end of the drive shaft (31).

6. Screen washer drive according to claim 5, characterised thereby that arranged at the lower end of the drive shaft (31) is a thread (55), which projects out of a roller bearing (43) in the base plate (1) and onto which a screw (59) for setting of the pressing force of the rotor (15) against the stator (17) is threadable.

7. Screen washer drive according to claim 6, characterised thereby that the screw (59) is lockable by a locknut screwable onto the thread (55).

8. Screen washer drive according to claim 6 or 7, characterised thereby that an axial bearing (63) with a pressure washer (65) is arranged between the screw (59) and the end face (67) of a cylindrical projection (68) at the base plate (1).

9. Screen washer drive according to one of the preceding claims, characterised thereby that the ultrasound motor (7) is drivable by way of a cable lead (75) of a drive circuit (77), to which rotor setting signals from a position sensor (113, 117) and voltage-coded signals are conducted by way of a busbar (109) by means of a pivot arm switch (101), and that the position sensor (113, 117) is an optical sensor which detects marking points (111) arranged on the rotor (15).

10. Screen washer drive according to claim 9, characterised thereby that the marking points (111) are arranged on the circumferential surface (115) of the rotor (15).

11. Screen washer drive according to one of the preceding claims, characterised thereby that the rotor (15) [has] marking points (4a, 4b, 4c, 4d, 4e, 4f and 5a, 5b, 5c, 5d, 5e, 5f), which are recognisable by the position sensor (113, 115), for recognition of the park position, of a wiper zero location for position numbering, and of the points at which the speed shall be varied and the wiper (71) stopped.

12. Screen washer drive according to one of the preceding claims, characterised thereby that signals, by which the normal wipe range of the screen wiper (71) is reducible to a small wipe field size,from a control element are conducted to the drive circuit (77).

13. Screen washer drive according to claim 12, characterised thereby that signals, by which the reduced wipe field size is displaceable, are conducted to the control circuit (77) for the ultrasound motor (7).

14. Screen washer drive according to one of the preceding claims, characterised thereby that the wiper speed of the screen wiper (71) is variable by the drive circuit (77) according to the strength of rain.

15. Screen washer drive according to one of the preceding claims, characterised thereby that the wipe speed of the screen wiper at the reversing points (4f, 5f) of the wiper blade is reducible slowly to zero.

## Revendications

1. Entraînement électrique d'essuie-glace, en particulier pour véhicules automobiles, pour lequel il est prévu, en tant qu'élément d'entraînement à moteur électrique, un moteur à ultrasons autobloquant (7) par l'intermédiaire de l'arbre menant (31) duquel est entraîné le bras d'essuie-glace (71), caractérisé en ce que le rotor (15) du moteur à ultrasons (7) porte, sur son arbre menant (31), le bras d'essuie-glace (71) et en ce que le stator (17), qui présente une partie élastique (47) et un vibrateur se composant d'un convertisseur d'énergie électrique mécanique pour la génération d'une onde se déplaçant en arc de cercle, est relié fixement, de manière thermoconductrice, à la carrosserie (79) du véhicule.

2. Entraînement d'essuie-glace selon la revendication 1, caractérisé en ce que le moteur à ultrasons (7) peut être fixé, au moyen de raccords vissés, à une plaque de base 1 dont la partie de bride (3) est reliée, de manière thermoconductrice, à la carrosserie (79) en tôle d'un véhicule automobile.

3. Entraînement d'essuie-glace selon la revendication 2, caratérisé en ce qu'entre la partie de bride (3) et la carrosserie (79) est disposée une tôle thermoconductrice (29) se composant d'un métal de bonne conductibilité thermique et en ce que la plaque de base (1) est fabriquée en métal.

4. Entraînement d'essuie-glace selon l'une des revendications précédentes caractérisé en ce que le moteur à ultrasons (7) est entouré d'un carter (19) qui est relié de manière solidaire à la plaque de fond (1).

5. Entraînement d'essuie-glace selon l'une des revendications précédentes, caractérisé en ce qu'à l'autre extrémité de l'arbre menant (31) est fixé un ressort Belleville (33) qui sert de dispositif de précontrainte et presse le rotor (15) contre le stator (17).

6. Entraînement d'essuie-glace selon la revendication 5, caractérisé en ce qu'à l'autre extrémité de l'arbre menant (31) est disposé un filet (55) qui dépasse d'un palier à rouleaux (43) dans la plaque de base (1) et sur lequel peut être vissée une vis (59) pour le réglage de la force de compression du rotor (15) contre le stator (17).

7. Entraînement d'essuie-glace selon la revendication 6, caractérisé en ce que la vis (59) peut être bloquée par un contre-écrou (61) pouvant être vissé sur le filetage (55).

8. Entraînement d'essuie-glace selon la revendication 6 ou 7, caractérisé en ce qu'un palier axial (63) muni d'une rondelle de pression (65) est placé entre la vis (59) et la surface avant (67) d'un appendice cylindrique (68) contre la plaque de fond (1).

9. Entraînement d'essuie-glace selon l'une des revendications précédentes, caractérisé en ce que le moteur à ultrasons (7) peut être commandé par un câble (75) au moyen d'une commande (77) qui lui envoie des signaux de positionnement du rotor provenant d'un capteur de position (113, 117) et des signaux de tension codée par l'intermédiaire d'un bus (109) au moyen d'un commutateur (101) fixé à la colonne de direction et en ce que le capteur de position (113, 117) est un capteur optique qui balaye les points de repère (111) se trouvant sur le rotor (15).

10. Entraînement d'essuie-glace selon la revendication 9, caractérisé en ce que les points de repère (111) sont disposés sur la surface périphérique (115) du rotor (15).

11. Entraînement d'essuie-glace selon l'une des revendications précédentes, caractérisé en ce que le rotor (15) présente des points de repère (4a, 4b, 4c, 4d, 4e, 4f et 5a, 5b, 5c, 5d, 5e, 5f) reconnaissables par le capteur de position (113, 117) afin de déterminer la position d'arrêt, la position à zéro d'un essuie-glace et de numériser les positions et les points auxquels varie la vitesse et où l'essuieglace (71) doit être stoppé.

12. Entraînement d'essuie-glace selon l'une des revendications précédentes, caractérisé en ce que la commande (77) reçoit des signaux d'un organe de commande permettant de réduire la zone balayée normale de l'essuie-glace (71) à une aire balayée plus petite.

13. Entraînement d'essuie-glace selon la revendication 12, caractérisé en ce que la commande (77) reçoit des signaux d'un organe de commande destinés au moteur à ultra-sons (7) permettant de déplacer l'aire balayée plus petite.

14. Entraînement d'essuie-glace selon l'une des revendications précédentes, caractérisé en ce que la vitesse d'essuyage de l'essuie-glace (71) se modifie sous l'action de la commande (77) en fonction de l'intensité de la pluie.

15. Entraînement d'essuie-glace selon l'une des revendications précédentes, caractérisé en ce que la vitesse d'essuyage de l'essuie-glace peut être ramenée lentement à zéro aux points d'inversion (4f, 5f) de la raclette.
